# EUROPEAN PATENT SPECIFICATION

(11) **EP 3 045 349 B1**
(45) Date of publication and mention of the grant of the patent: **31.01.2018**
(21) Application number: 15199727.7
(22) Date of filing: 14.12.2015
(51) Int. Cl.: B60P 1/02

(54) **AXLE ASSEMBLY**
ACHSENANORDNUNG
ENSEMBLE D'ESSIEU

(30) Priority: 16.01.2015 GB 201500752
(43) Date of publication of application: 20.07.2016
(73) Proprietor: Peak Dynamics Ltd, Bidford on Avon, B50 4JH (GB)
(72) Inventor: Iliuta, Radu, Bidford on Avon, Warwickshire B50 4JH (GB)
(74) Representative: Ellis, Christopher Paul

(56) References cited:
- WO-A1-2007/145537
- DE-U1- 20 118 503
- DE-U1-202013 003 754
- US-A- 2 827 187
- US-A- 5 975 828
- US-B1- 6 592 139

## Description

### TECHNICAL FIELD

The present invention relates to an axle assembly for a wheeled vehicle - particularly but not exclusively a multi-axle assembly for a trailer.

### BACKGROUND ART

US2008/0247850 discloses a trailer having a multi-axle assembly comprising two axles, each axle comprising two arms, each arm having a wheel rotatably attached to one end thereof, the other end of each arm being pivotable relative to the trailer chassis. Those arms of the two axles located on the same side of the trailer are connected by an linear hydraulic actuator or ram, actuation of the ram causing the two arms to pivot and the respective wheels to move up or down relative to the trailer, thereby adjusting the distance between the underside of the trailer and the ground surface.

WO2013/086567 discloses a trailer having a single axle comprising an axle casing having swing arms at both ends to which wheels are rotatably attached, as is known per se. The axle casing is in turn pivotally mounted relative to the vehicle chassis and, by means of a retraction mechanism comprising a flexible force transmission element such as a belt, a chain or a cable anchored at one end relative to the vehicle and attached at another end to the axle casing via an actuator arm, the axle casing can be pivoted relative to the vehicle chassis, thereby adjusting the distance between the underside of the trailer and the ground surface.

US5975828 discloses a suspension system for wheeled vehicles which allows the body or frame of a vehicle, such as a trailer, to be lowered or tilted. The suspension system includes an off-set axle which, when rotated, adjusts the clearance beneath the wheeled vehicle so that the body or frame thereof can be lowered or tilted. The off-set axle includes a central portion which can be rotated by applying tension to a tensioning member attached thereto.

### DISCLOSURE OF INVENTION

According to a first aspect, there is provided a multi-axle assembly (100) for a wheeled vehicle (1), the assembly having a longitudinal axis (A) aligned with the intended direction of travel (D) of the vehicle, the assembly comprising:
a first axle (10) having a first wheel (12) rotatably connected thereto and configured to pivot relative to the vehicle about a first pivot (27);
a second axle (20), spaced along the longitudinal axis (A) relative to the first axle, and having a second wheel (22) rotatably connected thereto and configured to pivot relative to the vehicle about a second pivot (37);
a flexible force transmission element (30) engaging respective first and second locations (14,24) on the first and second axles (10,20); wherein a first end of the flexible force transmission element (30) is configured to be fixedly anchored at a fourth location (31) relative to the vehicle (29) and wherein the flexible force transmission element (30) is configured to engage a fifth location (36) fixedly anchored relative to the vehicle, the flexible force transmission element successively engaging the fourth (31), second (24), fifth (36) and first (14) locations along its length; and
an actuator (40) configured to be anchored at a third location (42) relative to the vehicle and to move the flexible force transmission element (30) so as to vary the separation between the third location (42) and at least one of said first and second locations (14,24), thereby pivoting at least one of said first and second axles (10,20) relative to the vehicle.

The first location (14) may lie ahead of the first pivot (27) in the intended direction of travel (D).

The second location (24) may lie ahead of the second pivot (37) in the intended direction of travel (D)

The flexible force transmission element may successively engage said fourth (31), second (24) and first (14) locations along its length.

The flexible force transmission element (30) may be configured to move relative to said first and/or second location (14,24).

The first and/or second location (14,24) may comprise a bearing configured to engage the flexible force transmission element (30).

The bearing may be a roller (14,24) configured to engage the flexible force transmission element (30).

The assembly may comprise a first guide (26) for said element (30), the guide being located between first (14) and second (24) locations in the direction of intended travel (D).

The assembly may comprise a second guide (46) for said element (30), the guide being located between the second location (24) and the third location (42).

The element (30) may be a belt.

The actuator may be a pulley (40).

The actuator may be a linear actuator (70), in particular a worm drive (41) driving multiple pulleys (40) on a common shaft.

According to a second aspect, there is provided a vehicle comprising an assembly as set out above.

The vehicle may comprise a chassis (1), the assembly being configured to pivot below the chassis (1), in particular the upper extremity (1') thereof.

The chassis (1) may comprise at least one pair of longitudinal chassis members (2,3) along one side of the vehicle, the assembly being located between said pair.

### BRIEF DESCRIPTION OF DRAWINGS

Figure 1 is a perspective view of a first embodiment of the invention;
Figure 2 is a detailed view of the axle of figure 1;
Figure 3 is a perspective view of a detail of figure 1;
Figure 4 is a perspective view of the embodiment of figure 1 with front axle raised;
Figure 5 is a detail sectional view of a locking pin assembly;
Figure 6 shows the embodiment of figure 3 with both axles raised;
Figure 7 shows the embodiment of figure 1 with both axles raised;
Figure 8 is a detailed view showing a front axle tension spring;
Figure 9 shows the embodiment of figure 1 without chassis;
Figure 10 shows a second embodiment of the invention;
Figure 11 shows a mudguard suitable for use with the present invention;
Figure 12 shows detail of figure 11;
Figures 13A, B and C show another mudguard suitable for use with the invention.

### MODES FOR CARRYING OUT THE INVENTION

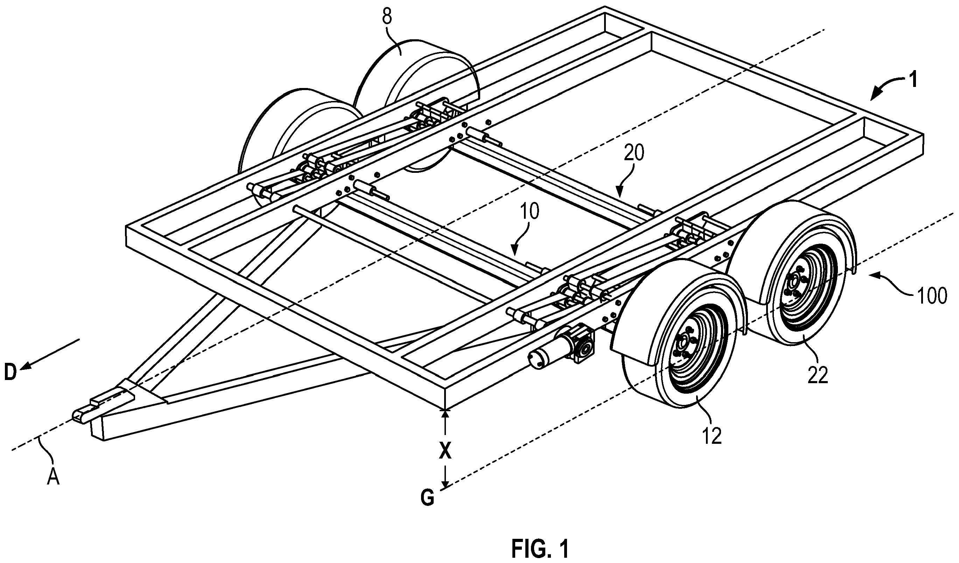

Referring to figure 1, a multi-axle assembly 100 for a vehicle such as a trailer having a chassis 1 has a longitudinal axis A aligned with the intended direction of travel D of the vehicle. The assembly has first and second axles 10,20, spaced along the longitudinal axis and having respective first and second wheels 12,22 connected thereto via swing arms and provided with mudguards 8 as is known per se.

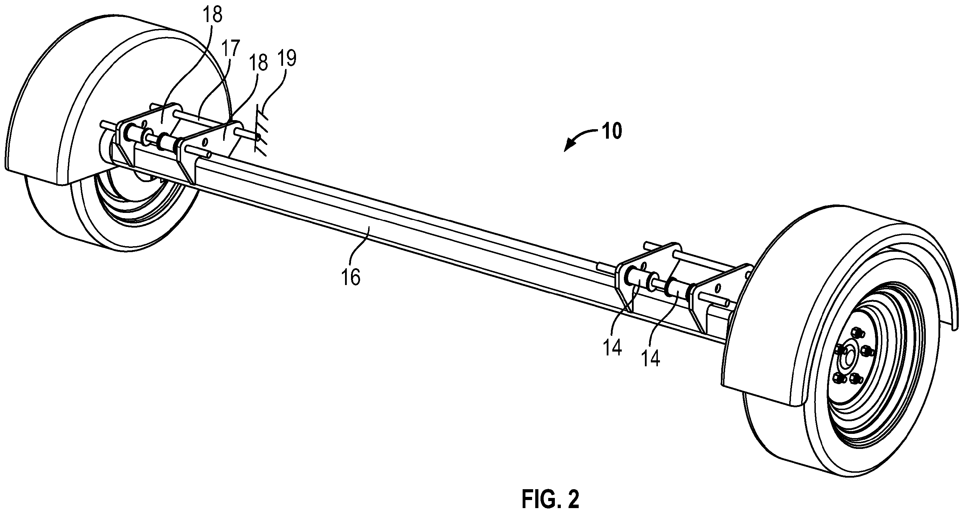

Figure 2 is a detailed view of the axle 10. Axle casing or body 16 has brackets 18 welded on its extremities. These brackets have holes in them and are used to house pins 17, which are themselves supported in the trailer chassis as indicated at 19, thereby allowing the axle 10 to pivot about relative to the vehicle chassis. Axle 20 is similar, pivoting about pin 37.

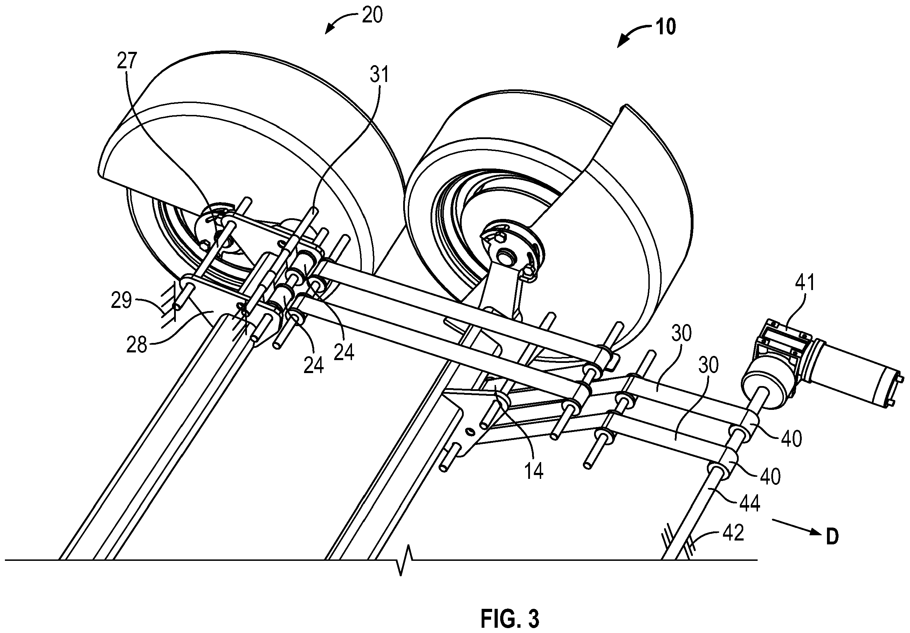

As shown in figure 3, each bracket 18 further carries rollers 14 which are engaged by flexible belts 30. Chains or cables may be used instead of belts. Whilst plural belts provide the advantage of redundancy and hence increased safety, single belts may also be used. The same belts also engage corresponding rollers 24 carried by brackets 28 on axle 20, which is pivotable about pins 27 secured to the vehicle as indicated at 29. One end of each belt is anchored to the chassis 29 by pin 31 while the other end of each belt is secured to an actuator, in this case a pulley or winch 40 anchored by bearings (indicated at 42) relative to the vehicle and driven by electric motor 41 (although other types of drive, such as manual, hydraulic or lever, are also possible).

Pin 31 is located at least ahead of pivot 27 in the direction of travel such that tension on the belt acts to move roller 24 forward and pivot second axle 20 downward. To ensure similar downward motion of first axle 10 under tension of the belt 30, a roller 36 is located ahead of pivot 37 in the direction of travel, the belt being guided between roller 24 and roller 36 by a further roller 26 which, as shown, is located ahead of pin 31 in the direction of travel. Yet another roller 46, located ahead of roller 36 in the direction of travel, guides the belt to the pulley 40.

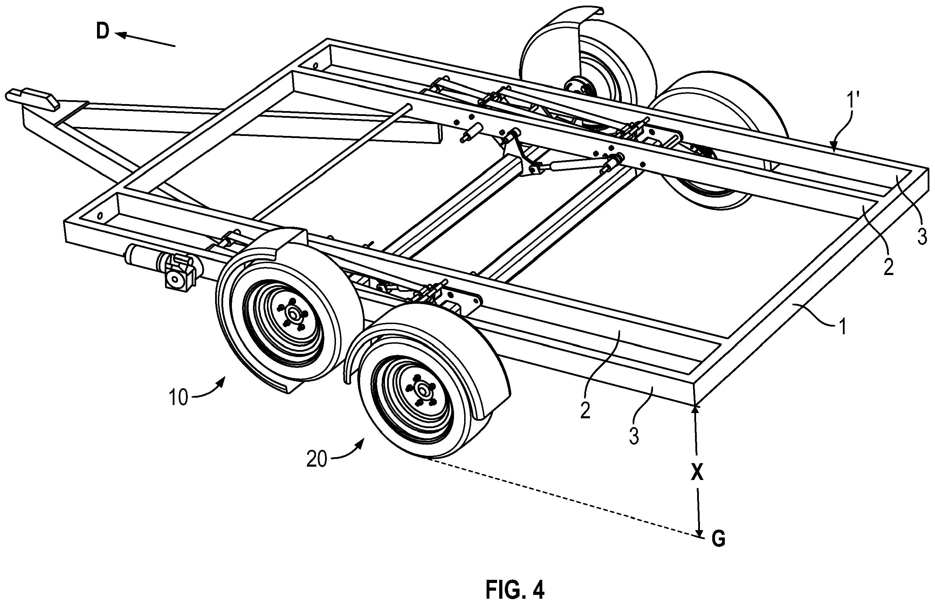

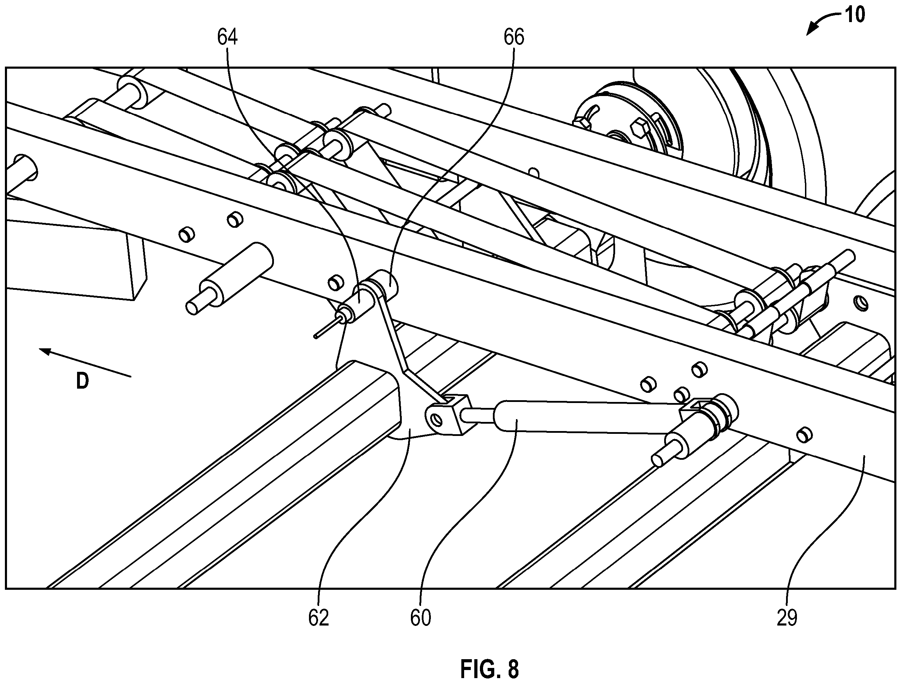

Note that the embodiment of figure 3 shows forward axle 10 locked in its 'up' position as discussed in more detail below with reference to figure 8. When the belts 30 are wound on to pulleys 40, roller 24 is in turn pulled towards the pulleys (in the direction of travel D) and in turn rotates the axle 20 downwards about pivot 27, thereby increasing the clearance X between the underside of the trailer chassis 1 and the ground surface G as shown in figure 4. However, it will be appreciated that, when the axles are not locked, the axles can move independently in respect to each other. This load sharing feature means that when lifting, the axles will automatically share the load between them.

As also evident from figure 4, the assembly is configured to pivot below the chassis 1, in particular the upper extremity 1' thereof. Specifically, each lever arm attached at one end to the axle and carrying a roller 14, 24 at its other end remains below upper extremity 1' of the chassis when in operation. Moreover, as shown, each lever arm rotates downwards towards when the wheel moves upwards as the trailer is lowered. These measures necessitate relatively short lever arms and to compensate, the flexible force transmission element (as shown, a belt) may be configured so as to provide a mechanical advantage. This may be achieved by configuring the belt such that portions act in parallel, e.g. by means of a pulley or system of pulleys.

The fixed pins of the axle assembly are fixed to the trailer chassis and the bracket design tucks under the chassis, between the pair of longitudinal chassis members 2,3 on each side of the trailer, thus providing a very compact product.

It will be appreciated that when axle 10 is not locked in position, winding of the belts pulls both rollers 14 and 24 towards the pulleys, thereby rotating both front and rear axles 10, 20 downwards.

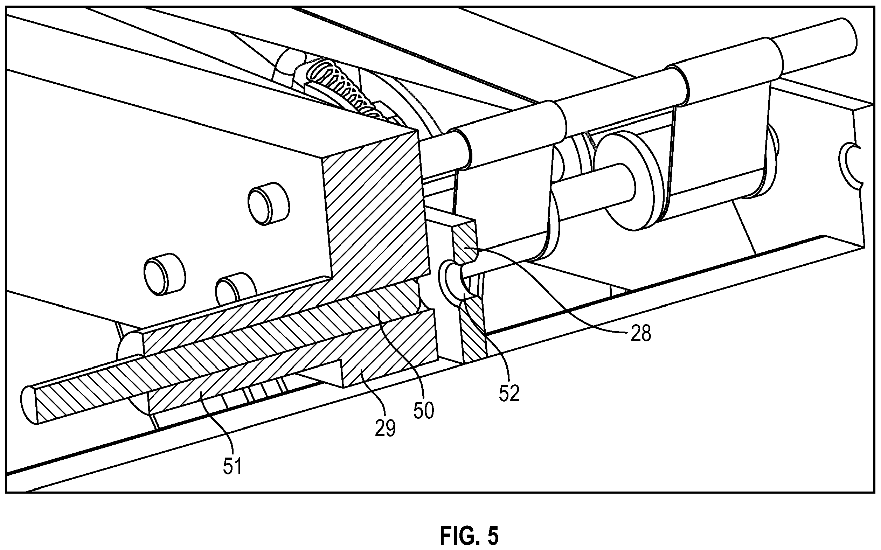

As shown in figure 5 with regard to the second axle 20, once in this 'down' position, one or both axles can be locked in this position relative to the chassis by means of locking pins 50 mounted in a housing 51 attached to the vehicle chassis 29 and slidable into engagement with a hole 52 in the bracket 28 of the second axle 20. A similar arrangement is used to lock the first axle 10.

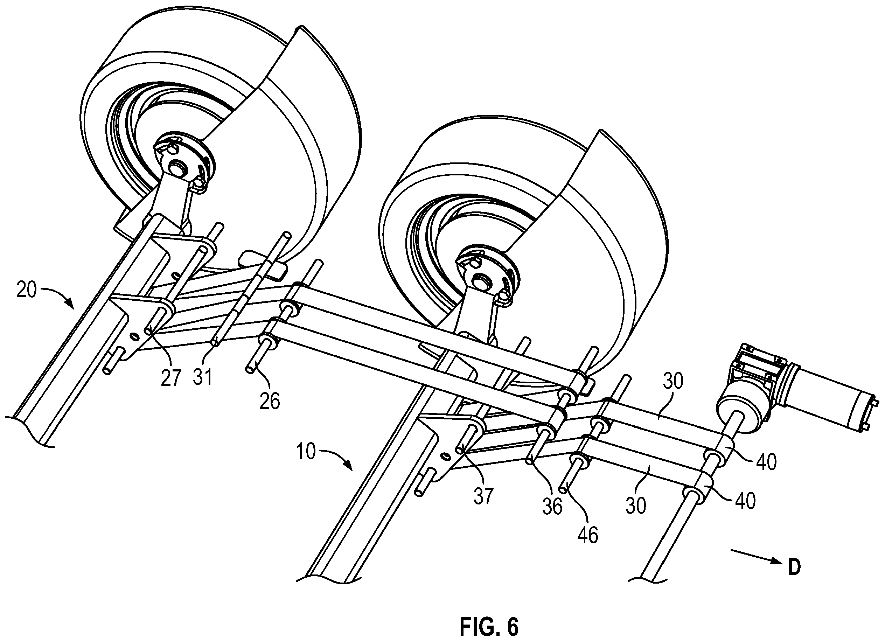

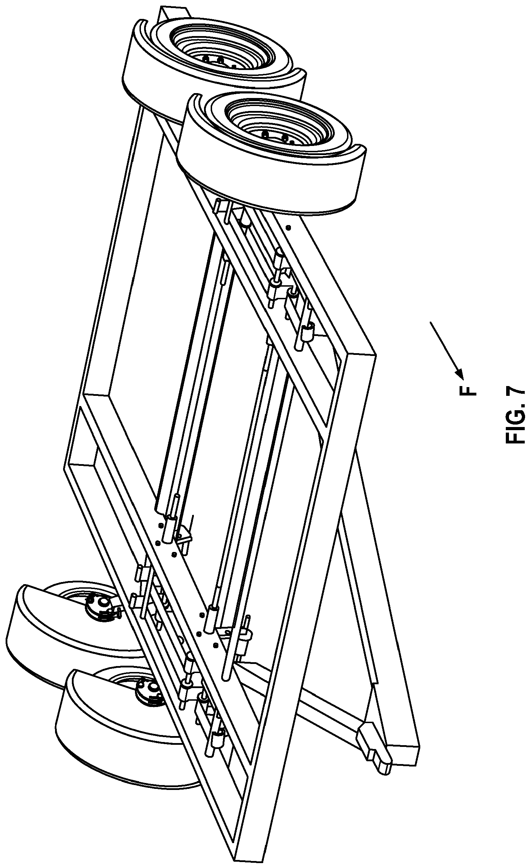

As shown in figure 6, releasing locking pins 50 and unwinding the belts 30 from the pulleys 40 allows the axle 20 to pivot upwards under the action of the weight of the trailer, thereby allowing the underside of the trailer to sit on the ground as illustrated in figure 7. To guide the belt 30, additional rollers are fixed to the chassis ahead (in the direction of travel D) of the second axle at 26 and ahead of the first axle at 46.

Axle 10 pivots similarly upwards if not already not locked in its up position as shown in figure 8. A tension spring unit 60 (which may employ a mechanical or gas spring element) has one end attached to the axle 10 via a bracket 62 and another end attached to the chassis 29 so as to bias the axle 10 into its 'up' position. Axle 10 is locked in this 'up' position by means of a Bowden cable-actuated locking pin 64 on the bracket which engages a corresponding lug 66 on the chassis. Alternative means, e.g. employing springs or solenoids, may also be employed to slide the pin into the lug. This feature is very useful on tandem trailers since they can be towed with just one axle down when they are empty. The result is a smoother suspension for empty trailers, less risk for the trailer to jump around the road, and much easier to park and to handle.

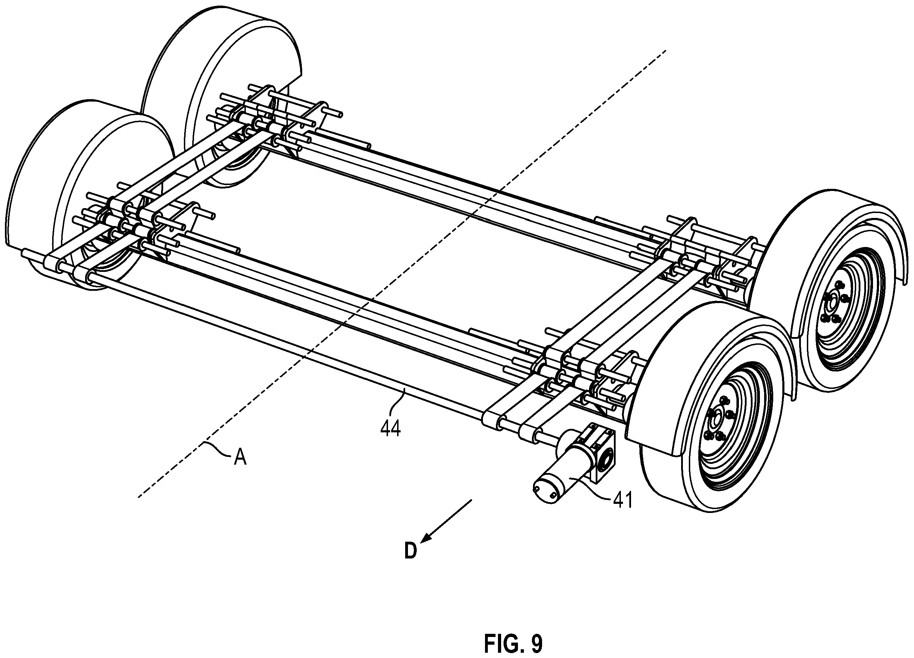

As shown in figure 9, which shows the assembly without the vehicle chassis, corresponding brackets, pins, rollers, belts and pulleys may be arranged on both sides of the vehicle, to either side of the longitudinal axis A, with a shaft 44 connecting the two sides with the single electric motor drive 41.

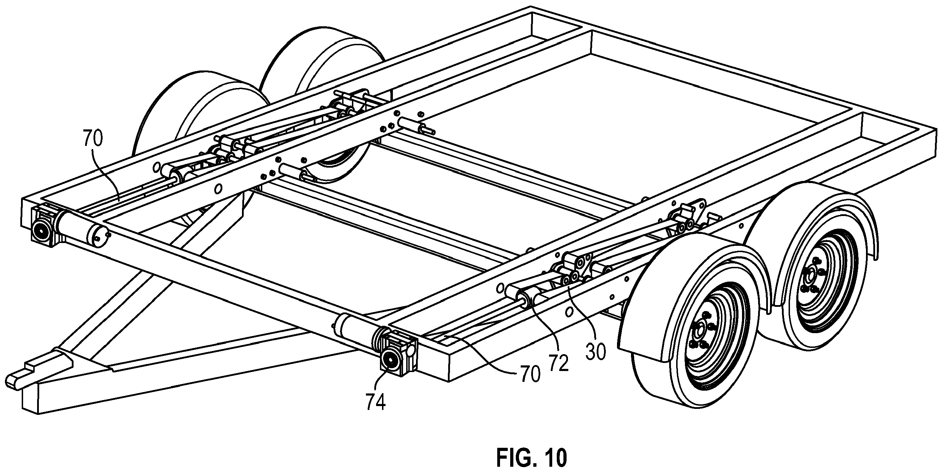

Alternatively, in place of a pulley/winch, belts may be displaced by means of a linear actuator such as a hydraulic or pneumatic ram or threaded rod/ ball screw actuator as indicated at 70 in figure 10. In the latter case, belts 30 are attached to a nut 72 that moves forward/backward (as indicated by arrow F/B) as rod 70 is rotated by motor 74.

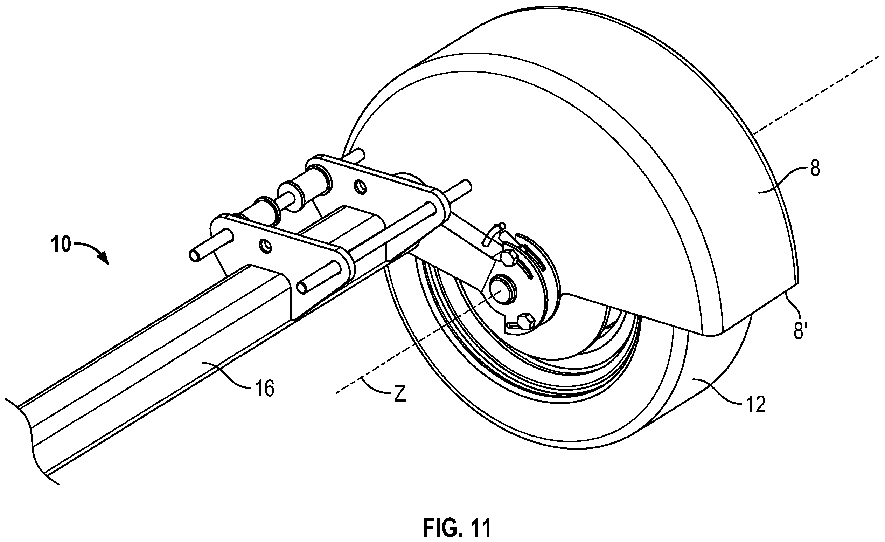

In lowering a trailer in the manner set out above, mudguards attached to the axle could dig in to the ground as a result of their tilting along with the wheels. To avoid this, and as shown in figure 11, mudguard 8 is configured to pivot about the axis Z of rotation of the wheel 12. In the particular embodiment shown, mudguard 8 is configured to pivot relative to the stub axle 11 which itself rotates relative to the axle casing 16 in a manner known per se.

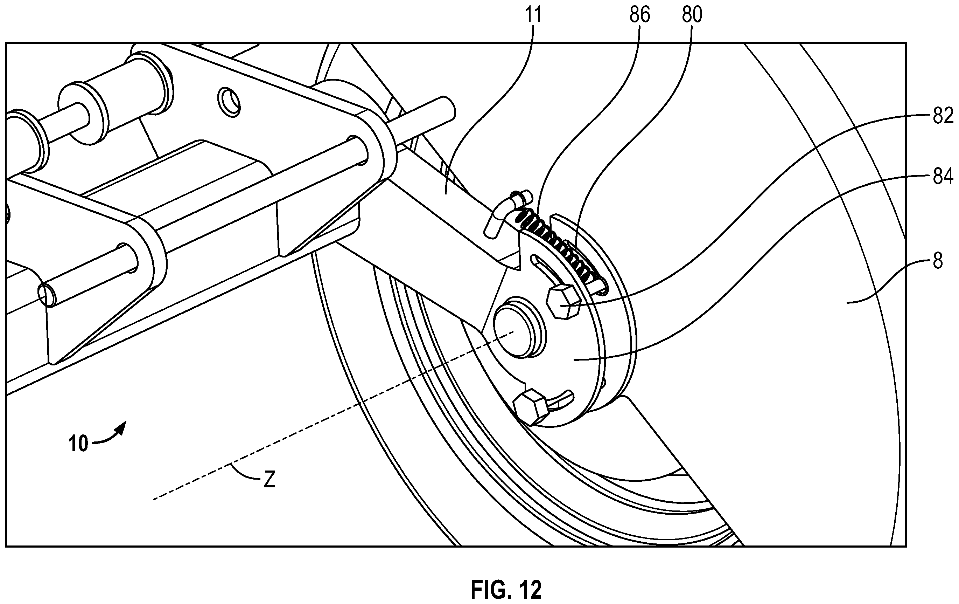

As shown in the detail view of figure 12, mudguard 8 is provided with bolts 82 which slide in arcuate slots 80 arranged in flanges 84 attached to the stub axle 11, the arcuate slots extending co-axially with the wheel rotation axis Z. Spring 86 biases the mudguard into a first position shown in figure 11 but allows the mudguard to rotate relative to the axle (against the action of the spring) when the rear edge 8' of the mudguard hits the ground as a result of the axle pivoting.

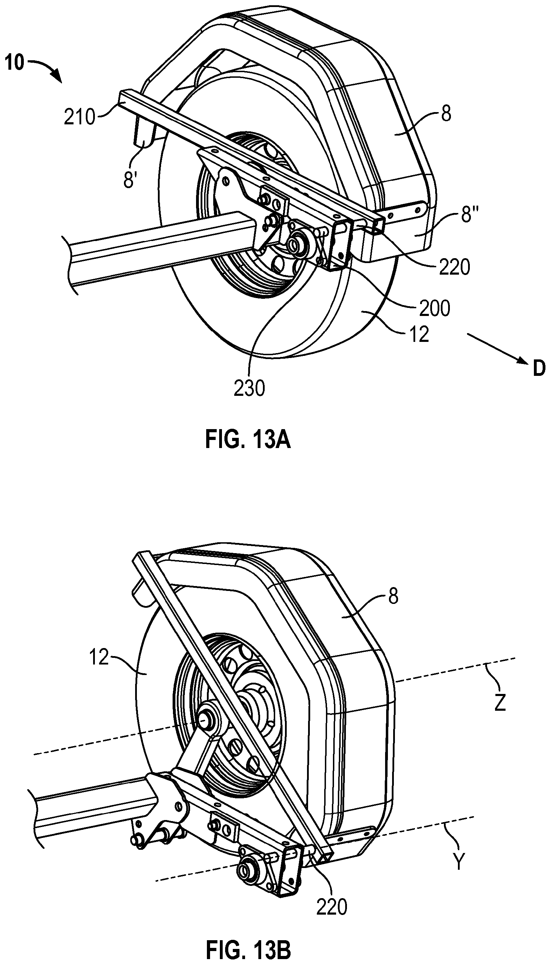

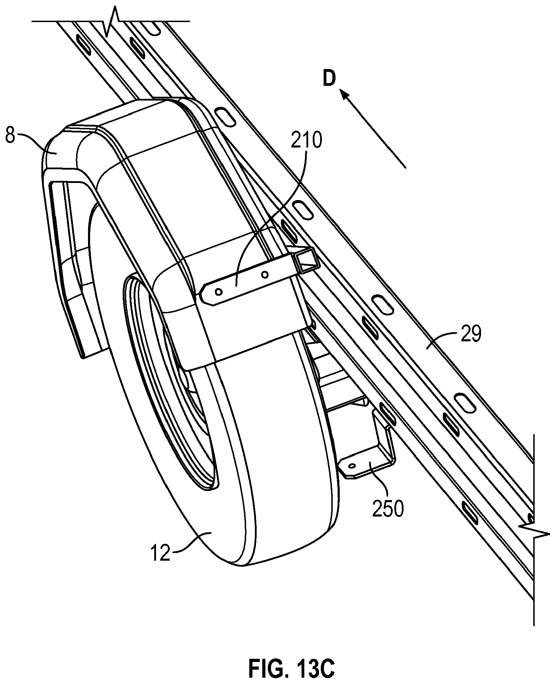

Figure 13A illustrates a second solution to the problem of mudguards digging in to the ground. An axle 10 is attached by means of a bracket 200 to the body of a wheeled vehicle (shown in figure 13C). Axle 10 has a wheel 12 connected thereto for rotation about an axis Z. A mudguard 8 has the form of an arc that partially surrounds the perimeter of the wheel, the two ends of the arc being connected by a support member 210 attached to the mudguard by screws or the like.

Mudguard 8 is pivoted to the bracket 200, and thus to the vehicle body, at a forward portion thereof in the direction of travel D. As shown, a pivot pin 220 is welded to the support member 210 adjacent to one end of the arc defined by the mudguard. Pivot pin rotates in corresponding holes/bush 230 in bracket 200. In an alternative embodiment, not shown, the necessary bush can be formed in a chassis member of the vehicle body.

In the driving configuration shown, the mudguard does not move together with the suspension like in the previous embodiment, but stays in place and allows for the suspension and the tires to move up and down while the mudguard stays fixed.

When, as shown in figure 13B, the axle and wheel 12 swing up so that the trailer sits on the ground, they force the mudguard up 8, and the mudguard assembly rotates around its pivot 220 having axis Y, Y lying ahead of axis Z in the direction of travel D.

Figure 13C corresponds to figure 13B when viewed from the rear and above and showing a vehicle chassis member 29 to which bracket 200 is attached. A stop 250 is provided to engage the rear end of support 210 and limit the extent of downward pivotal movement of the mudguard (under the action of gravity or a spring), ensuring adequate space between the wheel and the mudguard itself.

Moreover, the stop 250 may be configured to allow upward pivotal movement of the mudguard only when subject to a force above a threshold value, either the stop or mudguard support comprising a magnet configured to engage a magnet or ferrous part of the other of the stop or support. In the driving configuration, this arrangement locks the mudguards with sufficient force to the chassis. However, when the trailer is to sit on the ground and the wheel pushes the mudguard support up, this will overcome the threshold attractive force exerted by the magnet, releasing the mudguards to move upwards. The threshold force will similarly be overcome should the trailer be overloaded and the tires run against the mudguards, in which case the magnetic lock will release, thereby avoiding damage to the mudguards and/or tire.

The above embodiments are only given by way of example only and other arrangements are possible within the scope of the claims. For instance, the present invention is also applicable to arrangements having more than two axles.

## Claims

1. A multi-axle assembly (100) for a wheeled vehicle (1), the assembly having a longitudinal axis (A) aligned with the intended direction of travel (D) of the vehicle, the assembly comprising:
a first axle (10) having a first wheel (12) rotatably connected thereto and configured to pivot relative to the vehicle about a first pivot (27);
a second axle (20), spaced along the longitudinal axis (A) relative to the first axle, and having a second wheel (22) rotatably connected thereto and configured to pivot relative to the vehicle about a second pivot (37);
a flexible force transmission element (30) engaging respective first and second locations (14,24) on the first and second axles (10,20), wherein a first end of the flexible force transmission element (30) is configured to be fixedly anchored at a fourth location (31) relative to the vehicle (29) and
an actuator (40) configured to be anchored at a third location (42) relative to the vehicle and to move the flexible force transmission element (30) so as to vary the separation between the third location (42) and at least one of said first and second locations (14,24), thereby pivoting at least one of said first and second axles (10,20) relative to the vehicle,
**characterized in that**
the flexible force transmission element (30) is configured to engage a fifth location (36) fixedly anchored relative to the vehicle, the flexible force transmission element (30) successively engaging the fourth (31), second (24), fifth (36) and first (14) locations along its length.

2. Assembly according to claim 1, wherein the first location (14) lies ahead of the first pivot (27) in the intended direction of travel (D).

3. Assembly according to claim 1 or claim 2, wherein the second location (24) lies ahead of the second pivot (37) in the intended direction of travel (D).

4. Assembly according to any preceding claim, wherein the flexible force transmission element successively engages said fourth (31), second (24) and first (14) locations along its length.

5. Assembly according to any preceding claim, wherein the flexible force transmission element (30) is configured to move relative to said first and/or second location (14,24).

6. Assembly according to any preceding claim, wherein the first and/or second location (14,24) comprises a bearing configured to engage the flexible force transmission element (30).

7. Assembly according to claim 6, wherein the bearing is a roller (14,24) configured to engage the flexible force transmission element (30).

8. Assembly according to any preceding claim and comprising a first guide (26) for said element (30), the guide being located between first (14) and second (24) locations in the direction of intended travel (D).

9. Assembly according to any preceding claim and comprising a second guide (46) for said element (30), the guide being located between the second location (24) and the third location (42).

10. Assembly according to any preceding claim, wherein the element (30) is a belt.

11. Assembly according to any preceding claim, wherein the actuator is a pulley (40).

12. Assembly according to any preceding claim, wherein the actuator is a linear actuator (70).

13. A vehicle comprising an assembly according to any preceding claim.

14. Vehicle according to claim 13 and comprising a chassis (1), the assembly being configured to pivot below the chassis (1), in particular the upper extremity (1') thereof.

15. Vehicle according to claim 13, wherein the chassis (1) comprises at least one pair of longitudinal chassis members (2,3) along one side of the vehicle, the assembly being located between said pair.

16. Vehicle according to claim 14 or claim 15, wherein the first and second locations (14,24) are configured so as to remain below the upper extremity (1') of the chassis (1) during operation of the assembly.

## Patentansprüche

1. Mehrachsenanordnung (100) für ein Radfahrzeug (1), wobei die Anordnung eine Längsachse (A) aufweist, die mit der beabsichtigten Fahrtrichtung (D) des Fahrzeugs ausgerichtet ist, wobei die Anordnung Folgendes umfasst:
eine erste Achse (10) mit einem ersten Rad (12), das drehbar damit verbunden und konfiguriert ist, in Bezug auf das Fahrzeug um einen ersten Drehpunkt (27) zu schwenken;
eine zweite Achse (20), die entlang der Längsachse (A) in Bezug auf die erste Achse beabstandet ist und ein zweites Rad (22) aufweist, das drehbar damit verbunden und konfiguriert ist, in Bezug auf das Fahrzeug um einen zweiten Drehzapfen (37) zu schwenken;
ein flexibles Kraftübertragungselement (30), das in eine jeweilige erste und zweite Position (14, 24) auf der ersten und der zweiten Achse (10, 20) eingreift,
wobei ein erstes Ende des flexiblen Kraftübertragungselements (30) konfiguriert ist, an einer vierten Position (31) in Bezug auf das Fahrzeug (29) fest verankert zu werden, und
einen Aktuator (40), der konfiguriert ist, an einer dritten Position (42) in Bezug auf das Fahrzeug verankert zu werden und das flexible Kraftübertragungselement (30) zu bewegen, um so den Abstand zwischen der dritten Position (42) und mindestens einer der ersten und der zweiten Position (14, 24) zu variieren, wodurch mindestens eine der ersten und der zweiten Achse (10, 20) in Bezug auf das Fahrzeug geschwenkt werden,
**dadurch gekennzeichnet, dass**
das flexible Kraftübertragungselement (30) konfiguriert ist, in eine fünfte Position (36) einzugreifen, die in Bezug auf das Fahrzeug fest verankert ist, wobei das flexible Kraftübertragungselement (30) nacheinander entlang seiner Länge in die vierte (31), zweite (24), fünfte (36) und erste (14) Position eingreift.

2. Anordnung nach Anspruch 1, wobei die erste Position (14) in der beabsichtigten Fahrtrichtung (D) vor dem ersten Drehpunkt (27) liegt.

3. Anordnung nach Anspruch 1 oder Anspruch 2, wobei die zweite Position (24) in der beabsichtigten Fahrtrichtung (D) vor dem zweiten Drehpunkt (37) liegt.

4. Anordnung nach einem der vorhergehenden Ansprüche, wobei das flexible Kraftübertragungselement nacheinander entlang seiner Länge in die vierte (31), zweite (24) und erste (14) Position eingreift.

5. Anordnung nach einem der vorhergehenden Ansprüche, wobei das flexible Kraftübertragungselement (30) konfiguriert ist, sich in Bezug auf die erste und/oder die zweite Position (14, 24) zu bewegen.

6. Anordnung nach einem der vorhergehenden Ansprüche, wobei die erste und/oder die zweite Position (14, 24) ein Lager aufweisen, das konfiguriert ist, in das flexible Kraftübertragungselement (30) einzugreifen.

7. Anordnung nach Anspruch 6, wobei die erste und/oder die zweite Position (14, 24) ein Lager aufweisen, das konfiguriert ist, in das flexible Kraftübertragungselement (30) einzugreifen.

8. Anordnung nach einem der vorhergehenden Ansprüche, und umfassend eine erste Führung (26) für das Element (30), wobei die Führung zwischen der ersten (14) und der zweiten (24) Position in der Richtung der beabsichtigten Fahrtrichtung (D) angeordnet ist.

9. Anordnung nach einem der vorhergehenden Ansprüche, und umfassend eine zweite Führung (46) für das Element (30) aufweist, wobei die Führung zwischen der zweiten (24) und der dritten (42) Position angeordnet ist.

10. Anordnung nach einem der vorhergehenden Ansprüche, wobei das Element (30) ein Riemen ist.

11. Anordnung nach einem der vorhergehenden Ansprüche, wobei der Aktuator eine Riemenscheibe (40) ist.

12. Anordnung nach einem der vorhergehenden Ansprüche, wobei der Aktuator ein linearer Aktuator (70) ist.

13. Fahrzeug umfassend eine Anordnung nach einem der vorhergehenden Ansprüche.

14. Fahrzeug nach Anspruch 13 und umfassend einen Rahmen (1), wobei die Anordnung konfiguriert ist, unterhalb des Rahmens (1), insbesondere des oberen Endes (1') davon, zu schwenken.

15. Fahrzeug nach Anspruch 13, wobei der Rahmen (1) mindestens ein Paar Rahmenlängsträger (2, 3) entlang einer Seite des Fahrzeugs umfasst, wobei sich die Anordnung zwischen dem Paar befindet.

16. Fahrzeug nach Anspruch 14 oder Anspruch 15, wobei die erste und die zweite Position (14, 24) derart konfiguriert sind, dass sie während des Betriebs der Anordnung unterhalb des oberen Endes (1') des Rahmens (1) bleiben.

## Revendications

1. Ensemble (100) à plusieurs essieux destiné à un véhicule à roues (1), l'ensemble ayant un axe longitudinal (A) aligné avec la direction de déplacement prévue (D) du véhicule, l'ensemble comprenant :
un premier essieu (10) ayant une première roue (12) reliée de manière rotative à celui-ci et conçue pour pivoter par rapport au véhicule sur un premier pivot (27) ;
un second essieu (20), espacé du premier essieu le long de l'axe longitudinal (A) , et ayant une seconde roue (22) reliée de manière rotative à celui-ci et conçue pour pivoter par rapport au véhicule sur un second pivot (37) ;
un élément de transmission de force flexible (30) s'engageant avec des premier et deuxième emplacements respectifs (14, 24) sur les premier et second essieux (10, 20),
une première extrémité de l'élément de transmission de force flexible (30) étant conçue pour être ancrée de manière fixe à un quatrième emplacement (31) par rapport au véhicule (29) et
un actionneur (40) conçu pour être ancré à un troisième emplacement (42) par rapport au véhicule et pour déplacer l'élément de transmission de force flexible (30) de façon à faire varier la séparation entre le troisième emplacement (42) et au moins un desdits premier et deuxième emplacements (14, 24), de façon à faire pivoter au moins un desdits premier et second essieux (10, 20) par rapport au véhicule,
**caractérisé en ce que**
l'élément de transmission de force flexible (30) est conçu pour s'engager avec un cinquième emplacement (36) ancré de manière fixe par rapport au véhicule, l'élément de transmission de force flexible (30) s'engeant successivement avec les quatrième (31), deuxième (24), cinquième (36) et premier (14) emplacements sur sa longueur.

2. Ensemble selon la revendication 1, dans lequel le premier emplacement (14) se trouve en avant du premier pivot (27) dans la direction de déplacement prévue (D).

3. Ensemble selon la revendication 1 ou la revendication 2, dans lequel le deuxième emplacement (24) se trouve en avant du second pivot (37) dans la direction de déplacement prévue (D).

4. Ensemble selon l'une quelconque des revendications précédentes, dans lequel l'élément de transmission de force flexible s'engage successivement avec lesdits quatrième (31), deuxième (24) et premier (14) emplacements sur sa longueur.

5. Ensemble selon l'une quelconque des revendications précédentes, dans lequel l'élément de transmission de force flexible (30) est conçu pour se déplacer par rapport audit premier et/ou deuxième emplacement (14, 24).

6. Ensemble selon l'une quelconque des revendications précédentes, dans lequel le premier et/ou deuxième emplacement (14, 24) comprend un palier conçu pour s'engager avec l'élément de transmission de force flexible (30).

7. Ensemble selon la revendication 6, dans lequel le palier est un rouleau (14, 24) conçu pour s'engager avec l'élément de transmission de force flexible (30).

8. Ensemble selon l'une quelconque des revendications précédentes et comprenant un premier guide (26) destiné audit élément (30), le guide étant situé entre les premier (14) et deuxième (24) emplacements dans la direction de déplacement prévue (D).

9. Ensemble selon l'une quelconque des revendications précédentes et comprenant un second guide (46) destiné audit élément (30), le guide étant situé entre le deuxième emplacement (24) et le troisième emplacement (42).

10. Ensemble selon l'une quelconque des revendications précédentes, dans lequel l'élément (30) est une courroie.

11. Ensemble selon l'une quelconque des revendications précédentes, dans lequel l'actionneur est une poulie (40).

12. Ensemble selon l'une quelconque des revendications précédentes, dans lequel l'actionneur est un actionneur linéaire (70).

13. Véhicule comprenant un ensemble selon l'une quelconque des revendications précédentes.

14. Véhicule selon la revendication 13 et comprenant un châssis (1), l'ensemble étant conçu pour pivoter sous le châssis (1), en particulier l'extrémité supérieure (1') de celui-ci.

15. Véhicule selon la revendication 13, dans lequel le châssis (1) comprend au moins une paire d'éléments de châssis longitudinaux (2, 3) le long d'un côté du véhicule, l'ensemble étant situé entre ladite paire.

16. Véhicule selon la revendication 14 ou la revendication 15, dans lequel les premier et deuxième emplacements (14, 24) sont conçus de façon à rester sous l'extrémité supérieure (1') du châssis (1) pendant le fonctionnement de l'ensemble.
